# EUROPÄISCHE PATENTSCHRIFT

(11) **EP 3 966 473 B1**
(45) Veröffentlichungstag und Bekanntmachung des Hinweises auf die Patenterteilung: **06.08.2025**
(21) Anmeldenummer: 20722997.2
(22) Anmeldetag: 21.04.2020
(51) Int. Cl.: F16H 57/021, F16H 57/031, F16H 57/029

(54) **GETRIEBE MIT EINEM GEHÄUSETEIL, EINER WELLE, EINEM ERSTEN DECKELTEIL UND EINEM ZWEITEN DECKELTEIL**
TRANSMISSION COMPRISING A HOUSING PART, A SHAFT, A FIRST COVER PART AND A SECOND COVER PART
BOÎTE DE VITESSES COMPRENANT UNE PARTIE DE BOÎTIER, UN ARBRE, UNE PREMIÈRE PARTIE DE COUVERCLE ET UNE DEUXIÈME PARTIE DE COUVERCLE

(30) Priorität: 06.05.2019 DE 102019003164
(43) Veröffentlichungstag der Anmeldung: 16.03.2022
(73) Patentinhaber: SEW-EURODRIVE GmbH & Co. KG, 76646 Bruchsal (DE)
(72) Erfinder: TEGELTIJA, Miki, 76689 Karlsdorf-Neuthardt (DE); BÜHN, Oliver, 76703 Kraichtal (DE)
(86) Internationale Anmeldenummer: PCT/EP2020/025182
(87) Internationale Veröffentlichungsnummer: WO 2020/224797

(56) Entgegenhaltungen:
- CN-U- 202 195 000
- CN-U- 202 195 000
- CN-U- 202 484 205
- CN-U- 202 484 205
- KR-B1- 101 933 118
- KR-B1- 101 933 118

## Beschreibung

Die Erfindung betrifft ein Getriebe mit einem Gehäuseteil, einer Welle, einem ersten Deckelteil und einem zweiten Deckelteil.

Aus der DE 31 31713 A1 ist eine Vorrichtung zum Befestigen von Verschlusskappen bekannt.

Aus der DD 2 51 597 A1 ist ein Deckel zum Verschließen kreisförmiger Öffnungen an Getriebegehäusen bekannt.

Aus der CN 204 729 551 U ist ein Winkelgetriebe bekannt wobei auch bekannt ist, dass eine Welle in einem Getriebe mittels zweier Lager gelagert ist.

Aus der KR 10 1 933 118 B1 ist als nächstliegender Stand der Technik eine Leckage-Verhinderung für ein Getriebe mit den Merkmalen des Oberbegriffs des Anspruchs 1 bekannt.

Aus der CN 202 195 000 U ist ein Schneckengetriebe bekannt.

Aus der CN 202 484 205 U ist ebenfalls ein Schneckengetriebe bekannt.

Der Erfindung liegt daher die Aufgabe zugrunde, ein Getriebe in hoher Schutzart auszubilden.

Erfindungsgemäß wird die Aufgabe bei dem Getriebe nach den in Anspruch 1 angegebenen Merkmalen gelöst.

Von Vorteil ist dabei, dass die Lager der Welle nicht in dem axial zwischen den beiden Deckelteilen angeordneten Gehäuseteil, sondern in den Deckelteilen aufgenommen sind. Dabei sind Dichtringe zur dichten Verbindung der Deckelteile mit dem Gehäuseteil vorhanden.

Da die Gehäuseteile identisch zueinander ausgeführt sind, weisen sie beide jeweils zwei Sitze für Dichtringe auf, wobei von den Sitzen aber nur der jeweils andere wirklich benutzt ist für einen jeweiligen Dichtring. Auf diese Weise ist die Anzahl der für Herstellung des Getriebes notwendigen Teile geringgehalten.

Dabei sind die beiden Lager jeweils am selben Ringbereich aufgenommen. Aber nur beim ersten Lager ist der erste Ringbereich auf der radialen Außenseite vom Gehäuseteil abgestützt. Beim anderen Deckelteil ist zwar der zweite Ringbereich abgestützt, nicht aber der erste, welcher das zweite Lager aufnimmt.

Auf diese Weise sind Querkräfte und Schwingungen besser tolerierbar.

Bei einer vorteilhaften Ausgestaltung ist der zweite Ringbereich radial beabstandet vom ersten Ringbereich. Somit sind Lageraufnahme und Dichtung voneinander trennbar.

Bei einer vorteilhaften Ausgestaltung ist der zweite Dichtring radial beabstandet vom ersten Dichtring und/oder der zweite Dichtring ist auf einem größeren Radialabstand angeordnet als der erste Dichtring,

insbesondere wobei der zweite Ringbereich auf einem größeren Radialabstand angeordnet ist als der erste Ringbereich. Von Vorteil ist dabei, dass die Abdichtung auf der axialen Seite des zweiten Lagers auf viel größerem Radialabstand erfolgt als auf der abtreibenden Seite. Somit ist eine hohe Dichtigkeit sicher gewährleistbar, da die Auslenkungen und Kräfte im Bereich des zweiten Ringbereichs gering haltbar sind. Dichtfunktion und Lagerfunktion des zweiten Lagers sind somit voneinander separierbar. Hingegen ist die Dichtfunktion und die Lagerfunktion des ersten Lagers zusammengeführt am ersten Ringbereich des anderen Deckelteils.

Bei einer vorteilhaften Ausgestaltung sind die Ringachse der Ringbereiche koaxial zur Drehachse der Welle ausgerichtet. Von Vorteil ist dabei, dass die Ringbereiche koaxial zur Welle ausgerichtet sind und somit die Lager besser aufnehmbar sind.

Bei einer vorteilhaften Ausgestaltung ist der vom am zweiten Ringbereich ausgeformten Sitz für Dichtring in axialer Richtung überdeckte Bereich axial beabstandet vom am ersten Ringbereich ausgeformten Sitz für den ersten Dichtring in axialer Richtung überdeckten Bereich. Von Vorteil ist dabei, dass die beiden Ringbereiche voneinander entkoppelt sind, insbesondere bezüglich Auslenkungen und Schwingungsmoden. Somit ist das Dichtungssystem entkoppelt von dem Lagersystem. Auf das Lager einwirkende Kräfte sind also ferngehalten vom Dichtungssystem. Hingegen ist beim ersten Lager dieses im ersten Ringbereich aufgenommen, der auch als Sitz für einen Dichtring dient. Hier ist aber eine Abstützung des ersten Ringbereichs durch das Gehäuseteil ausgeführt und somit eine erhöhte Stabilität erreicht. Dagegen ist der das zweite Lager aufnehmende erste Ringbereich des anderen Deckelteils nicht abgestützt, sondern vom Dichtring beabstandet.

Eine vorteilhafte Ausgestaltung sieht vor, dass der Raumbereich nach radial innen durch eine zylindrische Mantelfläche und nach radial außen durch die andere zylindrische Mantelfläche begrenzt ist. Von Vorteil ist dabei, dass die Zylinderachse der zylindrischen Mantelflächen parallel zur Fügerichtung ausgerichtet ist, insbesondere also parallel zur axialen Richtung, also zur Richtung der Drehachse der Welle.

Bei einer vorteilhaften Ausgestaltung weist der am zweiten Ringbereich ausgeformte Sitz für den zweiten Dichtring eine zylindrische Mantelfläche auf, welche glatt, insbesondere stetig und differenzierbar, in einen gerundeten Bereich übergeht, insbesondere wobei der am Gehäuseteil ausgeformte Sitz für den zweiten Dichtring eine zylindrische Mantelfläche aufweist, welche glatt, insbesondere stetig und differenzierbar, in einen gerundeten Bereich übergeht. Von Vorteil ist dabei, dass die Zylinderachse dieser zweiten Zylindrischen Mantelfläche koaxial zur anderen Zylinderachse ist und koaxial zur Drehachse der Welle.

Bei einer vorteilhaften Ausgestaltung ist der zweite Dichtring in einem in Umfangsrichtung umlaufenden insbesondere schlauchförmigen Raumbereich angeordnet, welcher begrenzt ist durch die beiden zylindrischen Mantelflächen und die beiden gerundeten Bereiche, wobei der zweite Dichtring zwischen den beiden zylindrischen Mantelflächen in radialer Richtung gepresst ist und elastisch in axialer Richtung ausgedehnt ist,
insbesondere wobei der Raumbereich nach radial innen durch eine zylindrische Mantelfläche und nach radial außen durch die andere zylindrische Mantelfläche begrenzt ist. Von Vorteil ist dabei, dass der zweite Dichtring koaxial zum ersten Dichtring angeordnet ist. Allerdings ist der zweite Dichtring radial weiter ausgedehnt und somit sicherer anordenbar.

Bei einer vorteilhaften Ausgestaltung ist ein Verzahnungsteil, insbesondere ein planverzahntes Zahnrad, mit der Welle drehfest verbunden,
wobei das Verzahnungsteil mit einem Ritzel im Eingriff ist, dessen Drehachse senkrecht zur Drehachse des Verzahnungsteils ausgerichtet ist. Von Vorteil ist dabei, dass das Verzahnungsteil mit dem mit ihm kämmenden Ritzel zusammen als Spiroplanstufe oder Hypoidstufe ausbildbar ist. Somit sind hohe Übersetzungen und hohe Drehmoment bewirkbar.

Bei einer vorteilhaften Ausgestaltung ist der erste Ringbereich des das erste Lager aufnehmenden Deckelteils vom Gehäuseteil abgestützt, insbesondere an der radialen Außenseite des ersten Ringbereichs,
wobei der zweite Ringbereich des das zweite Lager aufnehmenden Deckelteils vom Gehäuseteil abgestützt ist, insbesondere an der radialen Außenseite des zweiten Ringbereichs. Von Vorteil ist dabei, dass im Bereich des ersten Lagers eine geringe Auslenkung durch Kräfte oder Schwingungen bewirkbar ist, weil die Abstützung versteifend wirkt. Allerdings sind beim zweiten Lager größere Auslenkungen bewirkbar, welche sich aber nicht störend auf das Dichtungssystem auswirken, da dieses axial, insbesondere auch vom zweiten Lager, und radial beabstandet angeordnet ist.

Bei einer vorteilhaften Ausgestaltung ist zwischen dem ersten Ringbereich des das erste Lager aufnehmenden Deckelteils und dem Gehäuseteil der erste Dichtring angeordnet, insbesondere an der radialen Außenseite des ersten Ringbereichs,
wobei zwischen dem zweiten Ringbereich des das zweite Lager aufnehmenden Deckelteils und dem Gehäuseteil der zweite Dichtring angeordnet ist, insbesondere an der radialen Außenseite des zweiten Ringbereichs. Von Vorteil ist dabei, dass das Dichtungssystem im Bereich des ersten Lagers ungestört ist, da dort die Abstützung durch das Gehäuseteil wirksam ist.

Bei einer vorteilhaften Ausgestaltung sind Teile aus einem metallischen Material, insbesondere Stahl, Zink oder

Aluminium, durch Gießen, insbesondere Druckguss, hergestellt. Von Vorteil ist dabei,
dass trotzdem eine hohe Dichtigkeit erreichbar ist, indem der Dichtring entsprechend elastisch gequetscht wird.

Besonders bevorzugt ist die Herstellung des Deckelteils und Gehäuseteils durch Zink-Druckguss.

Bei einer vorteilhaften Ausgestaltung ist im ersten, insbesondere das erste Lager aufnehmenden, Deckelteil ein Wellendichtring aufgenommen, welcher das Deckelteil zur Welle hin abdichtet,
wobei im zweiten, insbesondere das zweite Lager aufnehmenden, Deckelteil ein Verschlussdeckel aufgenommen ist,

insbesondere wobei im ersten Deckelteil Gewindebohrungen angeordnet sind zur Verbindung einer vom Getriebe antreibbaren Vorrichtung oder Last. Von Vorteil ist dabei, dass die Welle axial herausragt und somit eine Vorrichtung oder eine Last antreibbar ist. Mittels des Wellendichtrings ist das erste Lager im zumindest teilweise mit Schmieröl befüllten Getriebeinneren anordenbar. Somit ist eine gute Schmierung vorhanden.

Bei einer vorteilhaften Ausgestaltung ist das Verzahnungsteil näher am zweiten Lager als am ersten Lager angeordnet. Von Vorteil ist dabei, dass die von der im Eingriff befindlichen Verzahnung eingebrachten Querkräfte direkt ableitbar sind über den ersten Ringbereich. Trotzdem bleibt die Verbindung zwischen dem Gehäuseteil und dem Deckelteil abgedichtet, da der entsprechende Dichtring radial beabstandet ist.

Weitere Vorteile ergeben sich aus den Unteransprüchen.

Die Erfindung wird nun anhand von schematischen Abbildungen näher erläutert:

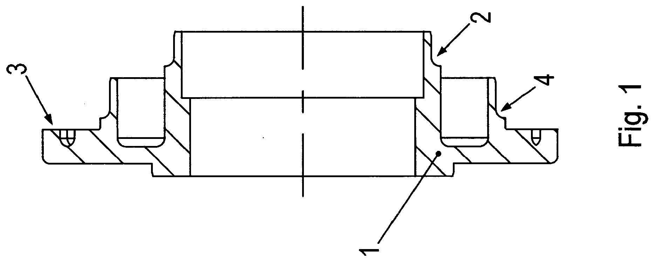

In der Figur 1 ist ein Deckelteil 1 eines Getriebes im Querschnitt dargestellt.

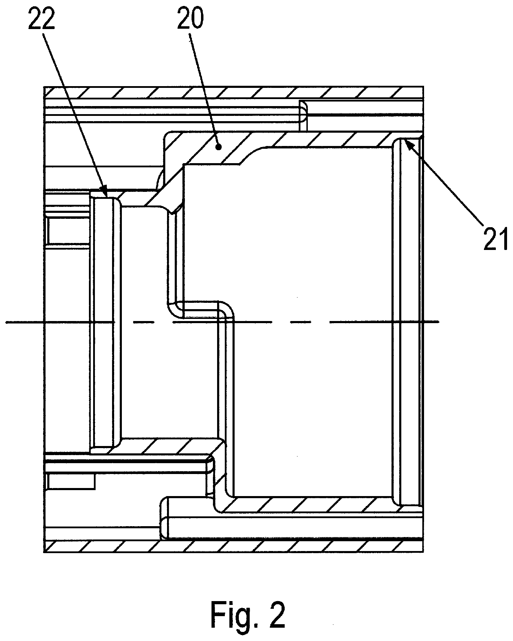

In der Figur 2 ist ein Gehäuseteil 20 des Getriebes im Querschnitt dargestellt.

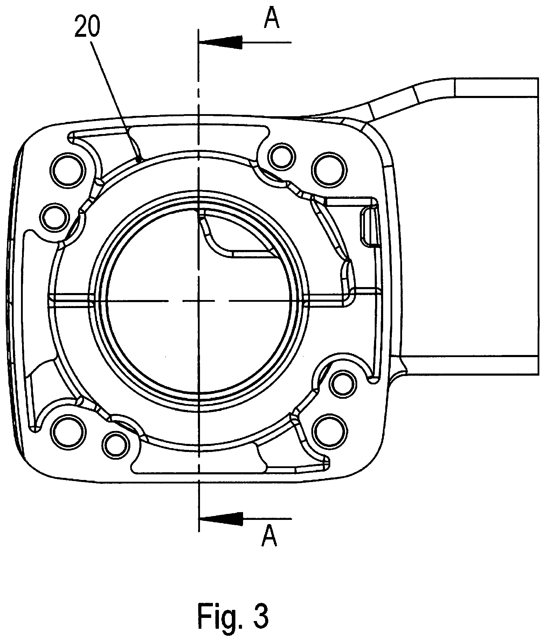

In der Figur 3 ist das Gehäuseteil 20 in Seitenansicht dargestellt.

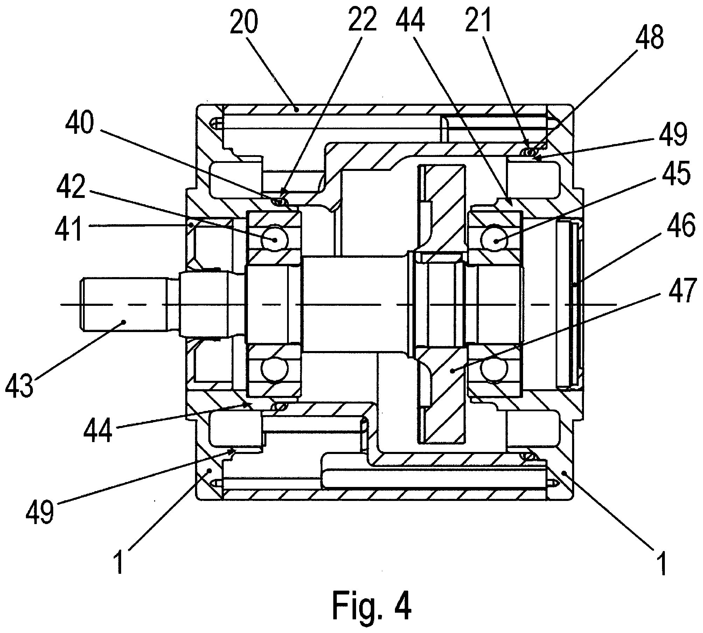

In der Figur 4 ist das Getriebe im Querschnitt dargestellt.

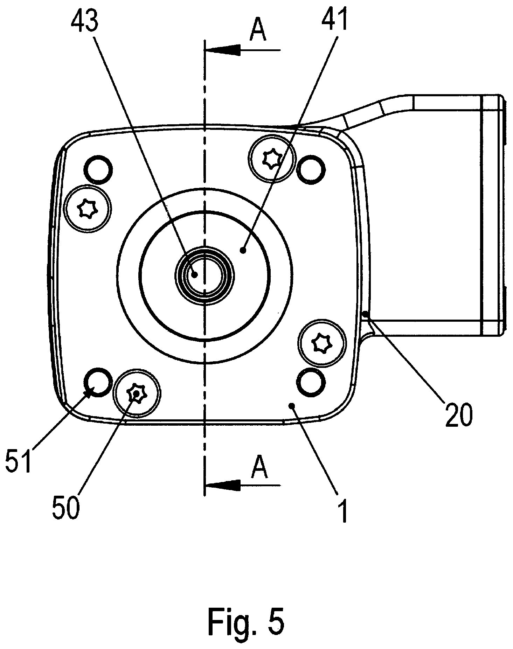

In der Figur 5 ist das Getriebe in Seitenansicht dargestellt.

Wie in den Figuren dargestellt, weist das Getriebe ein Gehäuseteil 20 auf, in welchem ein Verzahnungsteil 47, insbesondere Rad, angeordnet ist.

Dabei ist das Rad 47 drehfest mit einer Welle 43 verbunden, die mittels eines ersten Lagers 42 und mittels eines zweiten Lagers 45 drehbar gelagert ist.

Das Rad 47 ist vorzugsweise planverzahnt und bildet mit einem Ritzel eine Winkelgetriebestufe. Vorzugsweise ist die Verzahnung eine Hypoidverzahnung oder Spiroplanverzahnung. Bei der Spiroplanverzahnung ist das Ritzel ein einfach zu fertigendes Ritzel mit einer zylindrischen Einhüllenden, bei der Hypoidverzahnung weist das Ritzel hingegen eine kegelstumpfförmige Einhüllende auf.

Das erste Lager 42 ist in einem ersten Deckelteil 1 aufgenommen und das zweite Lager 45 ist in einem zum ersten Deckelteil 1 gleichartig, also identisch, gefertigten Deckelteil 1 aufgenommen.

Die Deckelteile 1 sind mit dem Gehäuseteil 20 an in axialer Richtung gesehen, also in Richtung der Drehachse der Welle 43 gesehen, gegenüberliegenden Seiten des Gehäuseteils 20 mit diesem verbunden.

Hierzu weist jedes der beiden Deckelteil 1 einen vorzugsweise fein bearbeiteten Lagersitz zur Aufnahme des ersten Lagers 42 oder des zweiten Lagers 45 auf.

Das Deckelteil 1 weist einen Ringbereich 44, insbesondere also ringartigen Vorsprung, auf,

An der in Radialer Richtung gesehen innen liegenden Wand ist der Lagersitz für das jeweils aufzunehmende Lager (42, 45), vorzugsweise fein bearbeitet, angeordnet.

An der in radialer Richtung gesehen außenliegenden Wand ist ein Dichtungssitz zur Aufnahme einer Dichtung ausgeformt. Vorzugsweise wird dieser jedoch nach der Herstellung des Deckelteils 1 nicht bearbeitet, weist also eine durch den Gießvorgang bewirkte Rauigkeit auf.

Der in axialer Richtung von diesem Dichtungssitz überdeckte Bereich ist in dem in axialer Richtung vom Lagersitz überdeckten Bereich umfasst.

Das Deckelteil 1 weist aber auch einen zweiten Dichtungssitz 4 auf, welcher auf größerem Radialabstand angeordnet ist. Auch dieser zweite Dichtungssitz ist in einem weiteren Ringbereich, insbesondere also ringartigen Vorsprung, angeordnet, insbesondere und zwar an dessen radialer Außenseite.

Der weitere Ringbereich 49 ist in Umfangsrichtung ebenso vollständig umlaufend ausgeformt wie der erste Ringbereich 44.

Der weitere Ringbereich 49 umgibt den ersten Ringbereich 44 radial, ist aber axial weniger hervorstehend als der erste Ringbereich 44. In axialer Richtung ist der zweite Dichtungssitz 4 beabstandet von dem ersten Dichtungssitz 2.

Somit weist das Deckelteil 1 zwei Dichtungssitze (2, 4) auf. Das Gehäuseteil 20 weist jedoch an seiner ersten axialen Seite nur einen einzigen Sitz 21 für einen Dichtring auf und an der anderen axialen Seite ebenfalls nur einen einzigen Sitz 22 für einen Dichtring auf.

Der Sitz 21 ist auf einem größeren Radialabstand als der Sitz 22 angeordnet.

Somit ist das auf der ersten axialen Seite mit dem Gehäuseteil 20 verbundene Deckelteil 1 auf einem größeren Radialabstand mittels Dichtring 48 dicht verbunden als das auf der anderen axialen Seite mit dem Gehäuseteil 20 verbundene Deckelteil 1 mittels Dichtring 40 dicht verbunden.

Zur Umgebung hin ist im ersten Deckelteil 1, bei welchem der Dichtring 40 im Sitz 22 aufgenommen ist, neben dem aufgenommenen Lager 42 ein Wellendichtring 41 aufgenommen, das zu der axial herausragenden Welle 43 hin abdichtet.

Zur Umgebung hin ist im ersten Deckelteil 1, bei welchem der Dichtring 48 im Sitz 21 aufgenommen ist, neben dem aufgenommenen Lager 45 ein Verschlussdeckel 46 aufgenommen, der die im Deckelteil 1 mittig angeordnete Ausnehmung dicht verschließt.

Der Verschlussdeckel 46 ist also im Deckelteil 1 auf dem gleichen Innendurchmesser aufnehmbar wie der Wellendichtring 41, wobei abhängig vom jeweiligen Deckelteil 1 nur entweder der Wellendichtring 41 oder der Verschlussdeckel 46 aufgenommen ist.

Die Deckelteile 1 sind jeweils mittels Schrauben 50 mit dem Gehäuseteil 20 verbunden und weisen Gewindebohrungen 51 auf, an welchen die anzutreibende Vorrichtung anschließbar und/oder verbindbar ist, insbesondere an der abtreibenden Seite.

Das Aufschieben und Anschrauben des jeweiligen Deckelteils 1 an das Gehäuseteil 20 wird in axialer Richtung durch aneinander anliegende Anschlagsflächen des Deckelteils 1 und des Gehäuseteils 20 bewirkt, insbesondere die vorzugsweise auf einem größeren Radialabstand angeordnet sind also die beiden Dichtringe (40, 48).

Der Ringbereich 44 wird beim Einschieben des Deckelteils 1 in das Gehäuseteil 20 in eine Ausnehmung des Gehäuseteils 20 eingeschoben.

Der in der Ausnehmung angeordnete und ausgeformte Sitz 22 weist einen zylindrischen Mantelflächenabschnitt auf, an welchen sich ein gerundeter Abschnitt glatt anschließt, insbesondere an dem dem Verzahnungsteil 47 zugewandten Ende des zylindrischen Mantelabschnitts.

Ebenso weist der in die Ausnehmung eingeschobene Ringbereich 44 des Deckelteils 1 einen zylindrischen Mantelflächenabschnitt auf, an welchen sich ein gerundeter Abschnitt glatt anschließt, insbesondere an dem vom Verzahnungsteil 47 abgewandten Ende des zylindrischen Mantelabschnitts des Deckelteils 1.

Somit ist der Dichtring 40 in einem in Umfangsrichtung umlaufenden schlauchförmigen Raumbereich elastisch derart verformt angeordnet, dass der Dichtring 40 an den beiden zylindrischen Mantelflächenabschnitten anliegt und dabei radial elastisch zusammengedrückt ist. insbesondere ist der Dichtring 40 somit in axialer Richtung breiter ausgedehnt als in radialer Richtung. Das Maß der elastischen Ausdehnung ist durch die Anschlagsflächen definiert.

Die Anlageflächen des Dichtrings 40, also die zylindrischen Mantelflächenabschnitte, sind in axialer Richtung erstreckt. Die axiale Richtung ist aber auch die Einschiebe- und Verbindungsrichtung des Deckelteils 1 mit dem Gehäuseteil 20.

In axialer Richtung vor und hinter dem Dichtring 40 ist noch ein freies Luftvolumen angeordnet, insbesondere zu der jeweiligen den beiden gerundeten Abschnitten.

Die elastische Presskraft wirkt in radialer Richtung auf den Dichtring 40, also senkrecht zur Einschieberichtung des Deckelteils 1, welches in axialer Richtung in die Ausnehmung des Gehäuseteils 20 eingeschoben wird.

Der zwischen dem anderen Deckelteil 1 und dem Gehäuseteil 20 angeordnete weitere Dichtring 48 ist ebenfalls in einem solchen schlauchförmigen Raumbereich angeordnet und zwischen den beiden zylindrischen Mantelflächen elastisch verformt angeordnet, so dass auch hier die radiale Presskraft senkrecht zur axial gerichteten Einschieberichtung ausgerichtet ist.

Vorteiligerweise ist mittels der Dichtringe (40, 48) eine Abdichtung zwischen dem jeweiligen Deckelteil 1 und dem Gehäuseteil 20 herstellbar, obwohl die zylindrischen Mantelflächen nach der Gussherstellung des Gehäuseteils 20 und der Deckelteile 1 jeweils unbearbeitet sind.

Der Ringbereich 44 an seiner radialen Innenseite das Lager 45 aufnimmt, aber an seiner radialen Außenseite nicht durch das Gehäuseteil 20 abgestützt ist, können die über das Verzahnungsteil 47 in die Welle 43 eingeleiteten Querkräfte zwar den Ringbereich 44 radial auslenken, beeinflussen aber die mit dem Dichtring 48 bewirkte Dichtung nicht, da dieser von dem anderen Ringbereich desselben Deckelteils 1 bewirkt ist. Daher ist das Verzahnungsteil näher am Lager 45 als am Lager 42 angeordnet.

Denn das Lager 42 ist in dem Ringbereich 44 des dortigen Deckelteils 1 aufgenommen, wobei dieser Ringbereich 44 an seiner radialen Außenseite vom Gehäuseteil 20 abgestützt ist. Die dort angeordnete Dichtung ist somit geringeren Querauslenkungen ausgesetzt. Gleiches gilt für die an der Abtriebsseite eingeleiteten Querkräfte, welche wegen der Abstützung keine wesentlichen Auslenkungen im Bereich des Dichtrings 40 bewirken, aber Auslenkungen des Ringbereichs 44 am auf der von der eintreibenden Seite abgewandten Seite des Verzahnungsteils 47 angeordneten weiteren Deckelteil 1 bewirken.

Für Körperschall-Schwingungsmoden gilt Entsprechendes.

Bei weiteren erfindungsgemäßen Ausführungsbeispielen sind die Dichtringe 40 und 48 als O-Ringe ausgeführt.

### Bezugszeichenliste

1 Deckelteil
2 Sitz für Dichtring, insbesondere O-Ring
3 Anlagefläche
4 zweiten Dichtungssitz für Dichtring, insbesondere O-Ring
20 Gehäuseteil
21 Sitz für zweiten Dichtring 48, insbesondere O-Ring
22 Sitz für ersten Dichtring 40, insbesondere O-Ring
40 erster Dichtring
41 Wellendichtring
42 Lager
43 abtreibende Welle
44 Ringbereich, insbesondere ringartiger Vorsprung
45 Lager
46 Verschlussdeckel
47 Verzahnungsteil, insbesondere Rad
48 zweiter Dichtring
49 zweiter Ringbereich, insbesondere ringartiger Vorsprung
50 Schraube
51 Gewindebohrung

## Patentansprüche

1. Getriebe mit einem Gehäuseteil (20), einer Welle, einem ersten Deckelteil (1) und einem zweiten Deckelteil (1),
wobei das erste Deckelteil (1) einen zum Getriebeinnenraum hervorragenden ersten Ringbereich (44) aufweist, an dessen radialer Innenseite ein erstes Lager (42) aufgenommen ist und an dessen radialer Außenseite ein Sitz (2) für einen Dichtring (40) ausgeformt ist, welcher an diesem Sitz (2) aufgenommen ist und zwischen dem Gehäuseteil (20) und dem ersten Ringbereich (44) angeordnet ist,
wobei das zweite Deckelteil (1) ebenfalls einen zum Getriebeinnenraum hervorragenden ersten Ringbereich (44) aufweist, an dessen radialer Innenseite ein zweites Lager (45) aufgenommen ist,
wobei die abtreibende Welle des Getriebes mittels des ersten und des zweiten Lagers drehbar gelagert ist,
wobei das erste Deckelteil (1) einen zum Getriebeinnenraum hervorragenden, zweiten Ringbereich (49) aufweist, an dessen radialer Außenseite ebenfalls ein Sitz (2) für einen Dichtring (48) ausgeformt ist,
wobei das zweite Deckelteil (1) einen zum Getriebeinnenraum hervorragenden, zweiten Ringbereich (49) aufweist, an dessen radialer Außenseite ebenfalls ein Sitz (2) für einen zweiten Dichtring (48) ausgeformt ist, welcher an diesem Sitz (2) aufgenommen ist und zwischen dem Gehäuseteil (20) und dem zweiten Ringbereich (49) angeordnet ist,
wobei die Drehachse der Welle die axiale Richtung definiert und die radiale Richtung darauf bezogen definiert ist,
**dadurch gekennzeichnet, dass**
der vom ersten Lager (42) in axialer Richtung überdeckte Bereich den vom am ersten Ringbereich (44) ausgeformten Sitz (2) für den ersten Dichtring (40) in axialer Richtung überdeckten Bereich umfasst,
wobei der am ersten Ringbereich (44) ausgeformte Sitz (2) für den ersten Dichtring (40) eine zylindrische Mantelfläche aufweist, welche glatt, insbesondere stetig und differenzierbar, in einen gerundeten Bereich übergeht,
wobei ein am Gehäuseteil (20) ausgeformte Sitz (22) für den ersten Dichtring (40) eine zylindrische Mantelfläche aufweist, welche glatt, insbesondere stetig und differenzierbar, in einen zweiten gerundeten Bereich übergeht,
wobei der erste Dichtring (40) in einem in Umfangsrichtung umlaufenden schlauchförmigen Raumbereich angeordnet ist, welcher begrenzt ist durch die beiden zylindrischen Mantelflächen und die beiden gerundeten Bereiche,
wobei der erste Dichtring (40) zwischen den beiden zylindrischen Mantelflächen in radialer Richtung gepresst ist und elastisch in axialer Richtung ausgedehnt ist,
die am Deckelteil (1) und am Gehäuseteil (20) ausgeformten Sitze für die Dichtringe (40, 48) unbearbeitet sind.

2. Getriebe nach Anspruch 1,
**dadurch gekennzeichnet, dass**
der zweite Ringbereich (49) radial beabstandet ist vom ersten Ringbereich (44).

3. Getriebe nach Anspruch 1 oder 2,
**dadurch gekennzeichnet, dass**
zweite Dichtring (48) radial beabstandet ist vom ersten Dichtring (40)
und/oder dass der zweite Dichtring (48) auf einem größeren Radialabstand angeordnet ist als der erste Dichtring (40),
insbesondere wobei der zweite Ringbereich (49) auf einem größeren Radialabstand angeordnet ist als der erste Ringbereich (44).

4. Getriebe nach einem der vorangegangenen Ansprüche,
**dadurch gekennzeichnet, dass**
die Ringachse der Ringbereiche koaxial zur Drehachse der Welle ausgerichtet sind.

5. Getriebe nach einem der vorangegangenen Ansprüche,
**dadurch gekennzeichnet, dass**
der vom am zweiten Ringbereich (49) ausgeformten Sitz (2) für Dichtring (48) in axialer Richtung überdeckte Bereich axial beabstandet ist vom am ersten Ringbereich (44) ausgeformten Sitz (2) für den ersten Dichtring (40) in axialer Richtung überdeckten Bereich.

6. Getriebe nach Anspruch 5,
**dadurch gekennzeichnet, dass**
der Raumbereich nach radial innen durch eine zylindrische Mantelfläche und nach radial außen durch die andere zylindrische Mantelfläche begrenzt ist.

7. Getriebe nach einem der vorangegangenen Ansprüche,
**dadurch gekennzeichnet, dass**
der am zweiten Ringbereich (49) ausgeformte Sitz (2) für den zweiten Dichtring (48) eine zylindrische Mantelfläche aufweist, welche glatt, insbesondere stetig und differenzierbar, in einen gerundeten Bereich übergeht,
insbesondere wobei der am Gehäuseteil (20) ausgeformte Sitz (2) für den zweiten Dichtring (48) eine zylindrische Mantelfläche aufweist, welche glatt, insbesondere stetig und differenzierbar, in einen gerundeten Bereich übergeht.

8. Getriebe nach Anspruch 7,
**dadurch gekennzeichnet, dass**
der zweite Dichtring (48) in einem in Umfangsrichtung umlaufenden insbesondere schlauchförmigen Raumbereich angeordnet ist, welcher begrenzt ist durch die beiden zylindrischen Mantelflächen und die beiden gerundeten Bereiche,
wobei der zweite Dichtring (48) zwischen den beiden zylindrischen Mantelflächen in radialer Richtung gepresst ist und elastisch in axialer Richtung ausgedehnt ist,
insbesondere wobei der Raumbereich nach radial innen durch eine zylindrische Mantelfläche und nach radial außen durch die andere zylindrische Mantelfläche begrenzt ist.

9. Getriebe nach einem der vorangegangenen Ansprüche,
**dadurch gekennzeichnet, dass**
ein Verzahnungsteil (47), insbesondere ein planverzahntes Zahnrad, mit der Welle drehfest verbunden ist,
wobei das Verzahnungsteil (47) mit einem Ritzel im Eingriff ist, dessen Drehachse senkrecht zur Drehachse des Verzahnungsteils ausgerichtet ist.

10. Getriebe nach einem der vorangegangenen Ansprüche,
**dadurch gekennzeichnet, dass**
der erste Ringbereich (44) des das erste Lager (42) aufnehmenden Deckelteils vom Gehäuseteil (20) abgestützt ist, insbesondere an der radialen Außenseite des ersten Ringbereichs,
wobei der zweite Ringbereich (49) des das zweite Lager (45) aufnehmenden Deckelteils vom Gehäuseteil (20) abgestützt ist, insbesondere an der radialen Außenseite des zweiten Ringbereichs.

11. Getriebe nach einem der vorangegangenen Ansprüche,
**dadurch gekennzeichnet, dass**
zwischen dem ersten Ringbereich (44) des das erste Lager (42) aufnehmenden Deckelteils und dem Gehäuseteil (20) der erste Dichtring (40) angeordnet ist, insbesondere an der radialen Außenseite des ersten Ringbereichs,
wobei zwischen dem zweiten Ringbereich (49) des das zweite Lager (45) aufnehmenden Deckelteils und dem Gehäuseteil (20) der zweite Dichtring (48) angeordnet ist, insbesondere an der radialen Außenseite des zweiten Ringbereichs.

12. Getriebe nach einem der vorangegangenen Ansprüche,
**dadurch gekennzeichnet, dass**
die Teile aus einem metallischen Material, insbesondere Stahl oder Aluminium, durch Gießen, insbesondere Druckguss, hergestellt sind.

13. Getriebe nach einem der vorangegangenen Ansprüche,
**dadurch gekennzeichnet, dass**
im ersten, insbesondere das erste Lager (42) aufnehmenden, Deckelteil (1) ein Wellendichtring (41) aufgenommen ist, welcher das Deckelteil (1) zur Welle hin abdichtet,
wobei im zweiten, insbesondere das zweite Lager (45) aufnehmenden, Deckelteil (1) ein Verschlussdeckel (46) aufgenommen ist,
insbesondere wobei im ersten Deckelteil (1) Gewindebohrungen (51) angeordnet sind zur Verbindung einer vom Getriebe antreibbaren Vorrichtung oder Last.

14. Getriebe nach einem der vorangegangenen Ansprüche,
**dadurch gekennzeichnet, dass**
das Verzahnungsteil (47) näher am zweiten Lager (45) als am ersten Lager (42) angeordnet ist.

## Claims

1. A gear unit having a housing part (20), a shaft, a first cover part (1) and a second cover part (1),
wherein the first cover part (1) has a first annular region (44) projecting towards the gear-unit interior, at the radial interior of which annular region there is received a first bearing (42) and at the radial exterior of which annular region there is formed a seat (2) for a sealing ring (40) which is received at this seat (2) and is arranged between the housing part (20) and the first annular region (44),
wherein the second cover part (1) likewise has a first annular region (44) projecting towards the gear-unit interior, at the radial interior of which annular region there is received a second bearing (45),
wherein the output shaft of the gear unit is rotatably mounted by means of the first and the second bearing,
wherein the first cover part (1) has a second annular region (49) projecting towards the gear-unit interior, at the radial exterior of which annular region there is likewise formed a seat (2) for a sealing ring (48),
wherein the second cover part (1) has a second annular region (49) projecting towards the gear-unit interior, at the radial exterior of which annular region there is likewise formed a seat (2) for a second sealing ring (48) which is received at this seat (2) and is arranged between the housing part (20) and the second annular region (49),
wherein the rotational axis of the shaft defines the axial direction and the radial direction is defined related thereto,
**characterised in that**
the region covered in an axial direction by the first bearing (42) comprises the region covered in an axial direction by the seat (2), formed at the first annular region (44), for the first sealing ring (40),
wherein the seat (2), formed at the first annular region (44), for the first sealing ring (40) has a cylindrical outer surface which merges into a rounded region in a smooth, in particular steady and differentiable, manner,
wherein a seat (22), formed at the housing part (20), for the first sealing ring (40) has a cylindrical outer surface which merges into a second rounded region in a smooth, in particular steady and differentiable, manner,
wherein the first sealing ring (40) is arranged in a tubular spatial region encircling in a circumferential direction, which is bounded by the two cylindrical outer surfaces and the two rounded regions,
wherein the first sealing ring (40) is pressed between the two cylindrical outer surfaces in a radial direction and is elastically spread in an axial direction,
the seats, formed at the cover part (1) and at the housing part (20), for the sealing rings (40, 48) are unworked.

2. A gear unit according to claim 1,
**characterised in that**
the second annular region (49) is radially at a distance from the first annular region (44).

3. A gear unit according to claim 1 or 2,
**characterised in that**
second sealing ring (48) is radially spaced apart from the first sealing ring (40) and/or **in that** the second sealing ring (48) is arranged at a greater radial distance than the first sealing ring (40),
in particular wherein the second annular region (49) is arranged at a greater radial distance than the first annular region (44).

4. A gear unit according to any one of the preceding claims,
**characterised in that**
the ring axis of the annular regions is oriented coaxially with the rotational axis of the shaft.

5. A gear unit according to any one of the preceding claims,
**characterised in that**
the region covered in an axial direction by the seat (2), formed at the second annular region (49), for sealing ring (48) is axially at a distance from the region covered in an axial direction by the seat (2), formed at the first annular region (44), for the first sealing ring (40).

6. A gear unit according to claim 5,
**characterised in that**
the spatial region is bounded radially inwards by a cylindrical outer surface and radially outwards by the other cylindrical outer surface.

7. A gear unit according to any one of the preceding claims,
**characterised in that**
the seat (2), formed at the second annular region (49), for the second sealing ring (48) has a cylindrical outer surface which merges into a rounded region in a smooth, in particular steady and differentiable, manner,
in particular wherein the seat (2), formed at the housing part (20), for the second sealing ring (48) has a cylindrical outer surface which merges into a rounded region in a smooth, in particular steady and differentiable, manner.

8. A gear unit according to claim 7,
**characterised in that**
the second sealing ring (48) is arranged in a, in particular tubular, spatial region encircling in a circumferential direction, which is bounded by the two cylindrical outer surfaces and the two rounded regions,
wherein the second sealing ring (48) is pressed between the two cylindrical outer surfaces in a radial direction and is elastically spread in an axial direction,
in particular wherein the spatial region is bounded radially inwards by a cylindrical outer surface and radially outwards by the other cylindrical outer surface.

9. A gear unit according to any one of the preceding claims,
**characterised in that**
a toothing part (47), in particular a toothed wheel in the form of a face gear, is connected to the shaft in a rotationally-fixed manner,
wherein the toothing part (47) meshes with a pinion whose rotational axis is oriented perpendicularly to the rotational axis of the toothing part.

10. A gear unit according to any one of the preceding claims,
**characterised in that**
the first annular region (44) of the cover part receiving the first bearing (42) is supported by the housing part (20), in particular at the radial exterior of the first annular region, wherein the second annular region (49) of the cover part receiving the second bearing (45) is supported by the housing part (20), in particular at the radial exterior of the second annular region.

11. A gear unit according to any one of the preceding claims,
**characterised in that**
the first sealing ring (40) is arranged between the first annular region (44) of the cover part, receiving the first bearing (42), and the housing part (20), in particular at the radial exterior of the first annular region,
wherein between the second annular region (49) of the cover part, receiving the second bearing (45), and the housing part (20) there is arranged the second sealing ring (48), in particular at the radial exterior of the second annular region.

12. A gear unit according to any one of the preceding claims,
**characterised in that**
the parts are manufactured of a metallic material, in particular steel or aluminium, by casting, in particular die casting.

13. A gear unit according to any one of the preceding claims,
**characterised in that**
a shaft sealing ring (41) is received in the first cover part (1), in particular receiving the first bearing (42), which shaft sealing ring seals the cover part (1) with respect to the shaft,
wherein a sealing cover (46) is received in the second cover part (1) in particular receiving the second bearing (45),
in particular wherein tapped bores (51) are arranged in the first cover part (1) for the connection of a device or load drivable by the gear unit.

14. A gear unit according to any one of the preceding claims,
**characterised in that**
the toothing part (47) is arranged closer to the second bearing (45) than to the first bearing (42).

## Revendications

1. Transmission comprenant une partie formant carter (20), un arbre, une première partie formant couvercle (1) et une seconde partie formant couvercle (1),
la première partie formant couvercle (1) présentant une première région annulaire (44) en saillie par rapport l'espace intérieur de transmission et au niveau de la face interne radiale de laquelle est accueilli un premier palier (42) et au niveau de la face externe radiale de laquelle est formé un siège (2) destiné à une bague d'étanchéité (40) qui est accueillie sur ledit siège (2) et qui est agencée entre la partie formant carter (20) et la première région annulaire (44),
la seconde partie formant couvercle (1) présentant également une première région annulaire (44) en saillie par rapport à l'espace intérieur de transmission et au niveau de la face interne radiale de laquelle est accueilli un second palier (45),
l'arbre de sortie de la transmission étant monté rotatif au moyen des premier et second paliers,
la première partie formant couvercle (1) présentant une seconde région annulaire (49) en saillie par rapport à l'espace intérieur de transmission et au niveau de la face externe radiale de laquelle est également formé un siège (2) destiné à une bague d'étanchéité (48),
la seconde partie formant couvercle (1) présentant une seconde région annulaire (49) en saillie par rapport à l'espace intérieur de transmission et au niveau de la face externe radiale de laquelle est également formé un siège (2) destiné à une seconde bague d'étanchéité (48) qui est accueillie sur ledit siège (2) et qui est agencée entre la partie formant carter (20) et la seconde région annulaire (49),
l'axe de rotation de l'arbre définissant la direction axiale et la direction radiale étant définie par rapport à celle-ci,
**caractérisée en ce que**
la région recouverte dans la direction axiale par le premier palier (42) comprend la région recouverte dans la direction axiale par le siège (2) destiné à la première bague d'étanchéité (40) et formé au niveau de la première région annulaire (44),
le siège (2) destiné à la première bague d'étanchéité (40) et formé au niveau de la première région annulaire (44) présentant une surface d'enveloppe cylindrique se transformant sans aspérités, en particulier de manière continue et différentiable, en une région arrondie,
un siège (22) destiné à la première bague d'étanchéité (40) et formé au niveau de la partie formant carter (20) présentant une surface d'enveloppe cylindrique se transformant sans aspérités, en particulier de manière continue et différentiable, en une seconde région arrondie,
la première bague d'étanchéité (40) étant agencée dans une région spatiale tubulaire qui s'étend dans la direction circonférentielle et qui est délimitée par les deux surfaces d'enveloppe cylindriques et les deux régions arrondies,
la première bague d'étanchéité (40) étant pressée dans la direction radiale entre les deux surfaces d'enveloppe cylindriques et étant étirée de manière élastique dans la direction axiale,
les sièges destinés aux bagues d'étanchéité (40, 48) et formés au niveau de la partie formant couvercle (1) et au niveau de la partie formant carter (20) n'étant pas usinés.

2. Transmission selon la revendication 1,
**caractérisée en ce que**
la seconde région annulaire (49) est espacée radialement par rapport à la première région annulaire (44).

3. Transmission selon la revendication 1 ou 2,
**caractérisée en ce que**
la seconde bague d'étanchéité (48) est espacée radialement par rapport à la première bague d'étanchéité (40) et/ou **en ce que** la seconde bague d'étanchéité (48) est agencée à une distance radiale supérieure à celle de la première bague d'étanchéité (40),
la seconde région annulaire (49) étant en particulier agencée à une distance radiale supérieure à celle de la première région annulaire (44).

4. Transmission selon l'une quelconque des revendications précédentes, **caractérisée en ce que**
les axes annulaires des régions annulaires sont orientés de manière coaxiale par rapport à l'axe de rotation de l'arbre.

5. Transmission selon l'une quelconque des revendications précédentes, **caractérisée en ce que**
la région recouverte dans la direction axiale par le siège (2) destiné à la bague d'étanchéité (48) et formé au niveau de la seconde région annulaire (49) est espacée axialement par rapport à la région recouverte dans la direction axiale par le siège (2) destiné à la première bague d'étanchéité (40) et formé au niveau de la première région annulaire (44).

6. Transmission selon la revendication 5,
**caractérisée en ce que**
la région spatiale est délimitée radialement vers l'intérieur par une surface d'enveloppe cylindrique et radialement vers l'extérieur par l'autre surface d'enveloppe cylindrique.

7. Transmission selon l'une quelconque des revendications précédentes, **caractérisée en ce que**
le siège (2) destiné à la seconde bague d'étanchéité (48) et formé au niveau de la seconde région annulaire (49) présente une surface d'enveloppe cylindrique se transformant sans aspérités, en particulier de manière continue et différentiable, en une région arrondie,
en particulier le siège (2) destiné à la seconde bague d'étanchéité (48) et formé au niveau de la partie formant carter (20) présentant une surface d'enveloppe cylindrique se transformant sans aspérités, en particulier de manière continue et différentiable, en une région arrondie.

8. Transmission selon la revendication 7,
**caractérisée en ce que**
la seconde bague d'étanchéité (48) est agencée dans une région spatiale en particulier tubulaire qui s'étend dans la direction circonférentielle et qui est délimitée par les deux surfaces d'enveloppe cylindriques et les deux régions arrondies,
la seconde bague d'étanchéité (48) étant pressée dans la direction radiale entre les deux surfaces d'enveloppe cylindriques et étant étirée de manière élastique dans la direction axiale,
la région spatiale étant en particulier délimitée radialement vers l'intérieur par une surface d'enveloppe cylindrique et radialement vers l'extérieur par l'autre surface d'enveloppe cylindrique.

9. Transmission selon l'une quelconque des revendications précédentes, **caractérisée en ce que**
une partie formant denture (47), en particulier une roue dentée à denture plane, est reliée de manière solidaire en rotation à l'arbre,
la partie formant denture (47) étant en prise avec un pignon dont l'axe de rotation est orienté perpendiculairement à l'axe de rotation de la partie formant denture.

10. Transmission selon l'une quelconque des revendications précédentes, **caractérisée en ce que**
la première région annulaire (44) de la partie formant couvercle accueillant le premier palier (42) est soutenue par la partie formant carter (20), en particulier au niveau de la face externe radiale de la première région annulaire,
la seconde région annulaire (49) de la partie formant couvercle accueillant le seconde palier (45) étant soutenue par la partie formant carter (20), en particulier au niveau de la face externe radiale de la seconde région annulaire.

11. Transmission selon l'une quelconque des revendications précédentes, **caractérisée en ce que**
la première bague d'étanchéité (40) est agencée entre la partie formant carter (20) et la première région annulaire (44) de la partie formant couvercle accueillant le premier palier (42), en particulier au niveau de la face externe radiale de la première région annulaire,
la seconde bague d'étanchéité (48) étant agencée entre la partie formant carter (20) et la seconde région annulaire (49) de la partie formant couvercle accueillant le second palier (45), en particulier au niveau de la face externe radiale de la seconde région annulaire.

12. Transmission selon l'une quelconque des revendications précédentes, **caractérisée en ce que**
les parties sont fabriquées en un matériau métallique, en particulier en acier ou en aluminium, par coulée, en particulier par coulée sous pression.

13. Transmission selon l'une quelconque des revendications précédentes, **caractérisée en ce que**
une bague d'étanchéité d'arbre (41) est accueillie dans la première partie formant couvercle (1) accueillant en particulier le premier palier (42), ladite bague d'étanchéité d'arbre permettant de rendre la partie formant couvercle (1) étanche par rapport à l'arbre,
un couvercle de fermeture (46) étant accueilli dans la seconde partie formant couvercle (1) accueillant en particulier le second palier (45),
des alésages filetés (51) étant en particulier agencés dans la première partie formant couvercle (1) en vue d'une liaison avec un dispositif ou une charge pouvant être entraîné par la transmission.

14. Transmission selon l'une quelconque des revendications précédentes, **caractérisée en ce que**
la partie formant denture (47) est agencée plus près du second palier (45) que du premier palier (42).
